# EUROPÄISCHE PATENTANMELDUNG

(11) **EP 0 580 083 A2**
(43) Veröffentlichungstag der Anmeldung: **26.01.1994**
(21) Anmeldenummer: 93111414.4
(22) Anmeldetag: 16.07.1993
(51) Int. Cl.: H04L 12/64, H04L 12/28, B60R 16/02

(54) **Rahmenstrukturiertes Bussystem**

(30) Priorität: 23.07.1992 DE 4224340
(71) Anmelder: Alcatel SEL Aktiengesellschaft, D-70435 Stuttgart (DE)
(72) Erfinder: Weis, Bernd X., Dr., D-70825 Korntal-Münchingen (DE); Schmietainski, Anke, Dr., D-71282 Hemmingen (DE)
(74) Vertreter: Schätzle, Albin, Dipl.-Phys.

(57) **Zusammenfassung**

Beschrieben wird ein rahmenstrukturiertes Bussystem, insbesondere für ein lokales Operationsnetzwerk für den automotiven Bereich, bei dem eine Vielzahl von Busstationen auf einen Datenbus zugreifen, und bei dem von einer Busstation eines Folge von Datenrahmen konstanter Bit-Länge erzeugt wird. Erfindungsgemäß ist vorgesehen, daß jeder Datenrahmen ein isochrones Rahmenmodul und ein asynchrones Rahmenmodul enthält, und daß die Aufteilung eines jeden einzelnen Datenrahmens des rahmenstrukturierten Bussystems in das asynchrone und das isochrone Rahmenmodul dynamisch variierbar ist.

## Beschreibung

Die Erfindung betrifft ein rahmenstrukturiertes Bussystem, bei dem eine Vielzahl von Busstationen auf einen Datenbus zugreifen, und bei dem von einer der Busstationen eine Folge von Datenrahmen konstanter Bit-Länge erzeugt wird.

Ein derartiges rahmenstrukturiertes Bussystem ist bekannt. Es findet bei den sogenannten synchronen Bus-Zugriffsmechanismen Verwendung, die im wesentlichen kanalorientiert organisiert sind: Eine Busstation generiert Datenrahmen gleicher Bit-Länge, die jeweils mehrere Zeitschlitze aufweisen. Jeder anderen Busstation wird nun ein Zeitschlitz zugeordnet, während dessen Dauer sie Daten in den Datenrahmen einfügen kann. Durch die Konstanz der Rahmenlänge und die fest vorgegebene Aufteilung der Zeitschlitze innerhalb eines Datenrahmens ist gewährleistet, daß jede Station eine definierte, fest vorgegebene Bitrate übertragen kann. Nachteilig an dieser starren Rahmen- und Zeitschlitzstruktur ist, daß ein derartiger synchroner Zugriffsmechanismus nur von geringer Effizienz ist, wenn die von den Busstationen zu übertragenden Datenmengen stark variieren. Diese Situation tritt bspw. bei einem lokalen Operationswerk für automotive Anwendungen auf, bei dem u.a. von einer Busstation Audio- und/oder Video-Daten in das Operationsnetzwerk eingespeist werden: Zur Betriebszeit liegen ständig hohe Datenraten auf dem Datenbus des Operationsnetzwerkes, während bei abgeschaltetem Audio/Video-Gerät keine Daten zu übertragen sind. Die feste Struktur der Zeitschlitze innerhalb einer fest vorgegebenen Datenstruktur führt dann dazu, daß außerhalb der Betriebszeit des Radios die der Audio/Video-Busstation zugeordneten Zeitschlitze ungenutzt bleiben. Infolge dieser mangelnden Ausnutzung der Übertragungskapazität wird die Leistungsfähigkeit des rahmenstrukturierten Bussystems drastisch reduziert.

Es sind auch asynchrone Zugriffsmechanismen bekannt, die typischerweise entweder ein Carrier Sensing Multpile Access-Verfahren mit Collision-Detection (CSMA/CD) oder ein Token-Bus-Verfahren benutzen.

Beim CSMA/CD-Verfahren sendet jede Busstation, die Daten zur Übertragung besitzt, ihre Daten auf den Bus, sofern der Bus nicht gerade von einer anderen Station benutzt wird (Carrier Sensing). Wenn zwei Busstation unter Berücksichtigung der Signallaufzeiten quasi-gleichzeitig senden, treten Kollisionen auf, die von den beteiligten Stationen durch Abhören des Busses erkannt werden müssen. Diese Stationen ergreifen dann geeignete Maßnahmen, um die Zugriffskollision aufzuheben. Nachteilig daran ist, daß alle gesendeten Daten dabei verlorengehen, so daß die Busstationen ihre Daten erneut senden müssen. Außerdem besitzt ein derartiges asynchrones CSMA/CD-Verfahren den Nachteil, daß die Übertragung eine bestimmten Bitrate für eine bestimmte Busstation nicht garantiert werden kann.

Bei einem Token-Zugriffsverfahren wird der Zugriff auf den Datenbus durch den eine Zugriffsberechtigung repräsentierenden Token geregelt. Es darf nur diejenige Busstation Daten auf den Bus legen, die im Besitz des Tokens ist. Der einzige Token des Systems wird dabei von Busstation zu Busstation weitergereicht, wobei garantiert sein muß, daß entsprechende Maßnahmen eingeleitet werden, wenn der Token verloren geht oder durch eine Fehlschaltung im Bussystem multipliziert wird. Nachteilig an diesen asynchronen Token-Verfahren ist, daß dieses nur beschränkt die Übertragung einer bestimmten Bitrate für eine bestimmte Station garantieren kann.

Zur Vermeidung dieser Nachteile stellt sich die Erfindung die Aufgabe, ein rahmenstrukturiertes Bussystem der eingangs genannten Art derart weiterzubilden, daß eine verbesserte Anpassung an das aktuelle Datenaufkommen erreicht wird.

Diese Aufgabe wird erfindungsgemäß dadurch gelöst, daß jeder Datenrahmen ein isochrones Rahmenmodul und ein asynchrones Rahmenmodul enthält, und daß die Aufteilung innerhalb eines jeden einzelnen Datenrahmens des rahmenstrukturierten Bussystems in das asynchrone und in das isochrone Rahmenmodul dynamisch variierbar ist.

Die erfindungsgemäße Kombination des isochronen und des asynchronen Rahmenmoduls in einem jeden Datenrahmen erlaubt in besonders vorteilhafter Art und Weise die Integration sowohl isochroner als auch asynchroner Dienste innerhalb des erfindungsgemäßen rahmenstrukturierten Bussystems. Dieses ist daher besonders flexibel im Hinblick auf die Anzahl und die Eigenschaften der einzelnen Busstationen des erfindungsgemäßen Bussystems, da dieses sowohl um isochron als auch um asynchron auf den Datenbus des rahmenstrukturierten Bussystems zugreifenden Busstationen erweitert werden kann. Durch die erfindungsgemäß vorgesehene dynamische Variierbarkeit der aktuellen Anteile des isochronen und des asynchronen Rahmenmoduls an der Übertragungskapazität des Datenrahmens wird in besonders einfacher Art und Weise eine effiziente Anpassung dieser verfügbaren Übertragungskapazität an das aktuelle Aufkommen von isochronen und asynchronen Diensten erreicht.

Eine vorteilhafte Weiterbildung der Erfindung sieht vor, daß die jeweils aktuelle Aufteilung des Datenrahmens in das isochrone und in das asynchrone Rahmenmodul durch ein diese beiden Rahmenmodule separierendes Teilungsmodul durchgeführt wird. Das innerhalb eines jeden Datenrahmens dynamisch verschiebbare Teilungsmodul wird durch eine definierte Bitkombination bestimmter Länge repräsentiert, die über asynchrone Signalisierungsprozeduren bestimmt wird. Durch diese Maßnahmen ist es besonders einfach möglich, die aktuellen Anteile für das isochrone und das asynchrone Rahmenmodul datenrahmenindividuell festzulegen.

Eine weitere vorteilhafte Weiterbildung der Erfindung sieht vor, daß die von Datenrahmen zu Datenrahmen veränderliche Länge in Bit des isochronen Rahmenmoduls ein ganzzahliges Vielfaches eines Basiskanals darstellt. Durch diese Maßnahmen ist es dann in besonders vorteilhafter Art und Weise leicht möglich, durch Verkettung von mehreren Basiskanälen für jede einzelne Busstation die isochrone Übertragung verschiedener Bitraten zu gewährleisten.

Weitere vorteilhafte Weiterbildungen der Erfindung ergeben sich aus den Unteransprüchen.

Weitere Einzelheiten der Erfindung sind dem Ausführungsbeispiel zu entnehmen, das im folgenden anhand der Figuren näher erläutert wird. Es zeigen:
- Figur 1: ein Ausführungsbeispiel eines modularen Datenrahmens;
- Figur 2: ein isochrones Rahmenmodul des Ausführungsbeispiels;
- Figur 3: ein asynchrones Rahmenmodul des Ausführungsbeispiels;
- Figur 4: ein Botschaftsmodul des Ausführungsbeispiels.

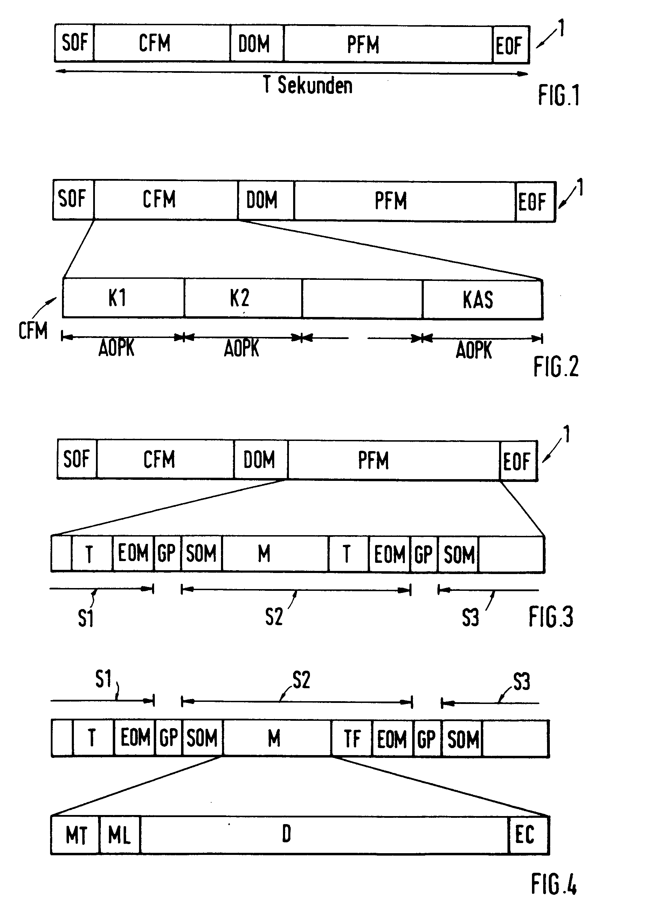

In Figur 1 ist ein Ausführungsbeispiel eines Datenrahmens 1 für ein rahmenstrukturiertes Bussystem dargestellt, der eine feste Rahmendauer von T Sekunden aufweist. Jeder Datenrahmen 1 ist in fünf Module gegliedert: Zu Beginn eines jeden Datenrahmens 1 ist ein Startmodul SOF angeordnet, welches den Beginn eines jeden Datenrahmens 1 kennzeichnet.

Dem Startmodul SOF folgt ein isochrones Rahmenmodul CFM, welches zur Übertragung der isochronen Dienste dient. An das isochrone Rahmenmodul CFM schließt sich ein Teilungsmodul DOM an, dem ein zur Übertragung der asynchronen Dienste dienendes asynchrones Rahmenmodul PFM folgt.

Das zur Trennung des isochronen Rahmenmoduls CFM vom asynchronen Rahmenmodul PFM dienende Teilungsmodul DOM ist nicht in einer fixen, fest vorgegebenen Position innerhalb des Datenrahmens 1 angeordnet. Vielmehr ist das Teilungsmodul DOM innerhalb jedes Datenrahmens 1 des rahmenstrukturierten Bussystems dynamisch verschiebbar, so daß in besonders vorteilhafter Art und Weise eine individuelle und variable Aufteilung eines jeden Datenrahmens 1 des rahmenstrukturierten Bussystems gegeben ist.

Am Ende eines jeden Datenrahmens 1 tritt ein Endmodul EOF auf, welches das Ende des Datenrahmens 1 signalisiert. Es ist aber auch möglich, auf das Startmodul SOF zu verzichten und allein das Endmodul EOF zur Kennzeichnung des Beginns und des Endes eines Datenrahmens heranzuziehen, indem das Endmodul EOF sowohl das Ende eines Datenrahmens als auch den Beginn des darauffolgenden Datenrahmens signalisiert.

Von besonderer Bedeutung ist nun, daß die Kombination des isochrone Dienste übertragenden isochronen Rahmenmoduls CFM und des asynchrone Dienste vermittelnde asynchrone Rahmenmodul PFM innerhalb eines einzigen Datenrahmens 1 in besonders vorteilhafter Art und Weise die Integration von isochronen als auch asynchronen Dienste innerhalb eines einzigen Datenrahmens und somit innerhalb eines einzigen rahmenstrukturierten Bussystems ermöglicht. Die dynamische Veränderung der Anteile des asynchronen und des isochronen Rahmenmoduls PFM und CFM an einem jeden Datenrahmen 1 erlaubt es besonders einfach, auf das aktuelle Datenaufkommen flexibel zu reagieren und die Rahmenmodul-Struktur derart zu modifizieren, daß eine optimale Ausnutzung der zur Verfügung stehenden Übertragungskapazität erreicht wird. Es ist mit einem derartigen Datenrahmen 1 mit einer flexiblen Rahmenmodul-Struktur also besonders einfach möglich, nur asynchrone Dienste allein oder sowohl asynchrone als auch isochrone Dienste oder nur isochrone Dienste allein zu übertragen.

Beim beschriebenen Datenrahmen 1 ist vorgesehen, daß zuerst das isochrone Rahmenmodul CFM und daran anschließend - durch das Teilungsmodul DOM getrennt - das asynchrone Rahmenmodul PFM übertragen wird. Es ist aber auch möglich, diese oben gewählte Reihenfolge umzukehren, d.h. zuerst das asynchrone Rahmenmodul PFM und dann das isochrone Rahmenmodul CFM zu übertragen. Ferner ist es möglich, daß das Teilungsmodul DOM vor dem asynchronen und dem isochronen Rahmenmodul PFM und CFM im Datenrahmen 1 angeordnet ist und - als Zeiger fungierend - Angaben über die Position dieser beiden Rahmenmodule CFM und PFM enthält. Wichtig hierbei ist nur, daß das dynamisch verschiebbare Teilungsmodul DOM - dessen Position über asynchrone Signalisierungsprozeduren bestimmt wird - eindeutig die genaue Abfolge von isochronem und asynchronem Rahmenmodul CFM und PFM im Datenrahmen 1 festlegt.

Um es besonders einfach zu ermöglichen, die fünf einzelnen Module eines Datenrahmens 1 zu identifizieren, ist vorgesehen, daß das Startmodul SOF, das Endmodul EOF und das Teilungsmodul DOM eine definierte Bitstruktur von festgelegter Länge aufweisen, die ansonsten in den zu übertragenden Daten nicht auftritt.

Eine weitere Möglichkeit für die Gestaltung der genannten Module ist die Realisierung von Codeverletzungen in einem Leitungscode.

Der Aufbau eines Rahmenmoduls für isochrone Dienste (isochrones Rahmenmodul CFM) ist in Figur 2 dargestellt.

Die durch den Abstand zwischen Startmodul SOF und Teilungsmodul DOM definierte Bitlänge des isochronen Rahmenmoduls CFM beträgt stets ein ganzzahliges Vielfaches eines Basiskanals K1, ...,KAS, wobei mit AS die Anzahl der Basiskanäle des jeweiligen isochronen Rahmenmoduls CFM eines bestimmten Datenrahmens 1 bezeichnet wird. Jeder Basiskanal K1-KAS ist mindestens 1 Bit lang und weist vorzugsweise eine bestimmte Anzahl von Oktets AOPK auf, so daß durch eine Verkettung mehrerer Basiskanäle, die dann gemeinsam mindestens einer bestimmten Busstation zugeordnet werden, die isochrone Übertragung einer bestimmten Bitrate gewährleistet wird.

Das in Figur 3 dargestellte asynchrone Rahmenmodul PFM ist analog zum isochronen Rahmenmodul CFM durch den Abstand in Bits zwischen dem Teilungsmodul DOM und dem Endmodul EOF definiert. Von Vorteil ist, daß für den Zugriff auf die im asynchronen Rahmenmodul PFM enthaltenen Daten ein beliebiges asynchrones Zugriffsverfahren verwendet werden kann. Derartige Zugriffsverfahren wurden bereits eingangs beschrieben und sind darüberhinaus dem Fachmann bekannt, so daß sich weitere Ausführungen hierzu an dieser Stelle erübrigen.

Das hier dargestellte asynchrone Rahmenmodul PFM ist für die Verwendung mit einem Token-Zugriffsverfahren ausgebildet. Es ist in mehrere Submodule S1-S3 unterteilt, wobei die Anzahl dieser Submodule der Anzahl der asynchrone Dienste übertragenden Busstationen des rahmenstrukturierten Bussystems entspricht, welche in dem jeweiligen asynchronen Rahmenmodul PFM des Datenrahmens 1 auf den Datenbus zugreifen. Von den Submodulen S1-S3 des gezeigten asynchronen Rahmenmoduls PFM ist - der Übersichtlichkeit halber - nur das zweite Submodul S2 dargestellt. Der Aufbau des ersten und des dritten Submoduls S1 und S3 ist mit der Struktur des zweiten Submoduls S2 identisch. Hierbei ist noch anzumerken, daß zwischen den einzelnen Submodulen S1-S3 jeweils ein Zeitschlitz GP vorgesehen ist, der keiner asynchronen Busstation zugeordnet ist. Diese Zeitschlitze GP dienen der Token-Bearbeitung innerhalb der Busstationen des rahmenstrukturierten Bussystems.

Das Submodul S2 weist ein an dessen Beginn angeordnetes Start-Flag SOM auf, an das sich ein Botschaftsmodul M anschließt. Dem Botschaftsmodul M folgt ein Token-Flag TF, welches die nächste Station festlegt, die ihre Daten im darauffolgenden Submodul auf den Datenbus legen kann. Ein End-Flag EOM beendet das Submodul.

Das Botschaftsmodul M ist in Figur 4 dargestellt. Es weist ein Botschaftstyp-Flag MT und ein Botschaftslänge-Flag ML auf, welche seinen Beginn kennzeichnen. Diesen beiden Flags MT und ML folgt das eigentliche Botschaftsmodul D, in dem die Daten der Busstation auf den Bus übertragen werden. Ein Prüffeld EC schließt das Botschaftsmodul M ab. Dieses Prüffeld EC dient zur Prüfung, ob die im eigentlichen Botschaftsmodul D enthaltenen Daten korrekt übertragen werden.

Zusammenfassend ist festzustellen, daß sich das beschriebene rahmenstrukturierende Bussystem insbesondere für einen Einsatz in einem lokalen Operationsnetzwerk für automotive Anwendungen oder zur Industriesteuerung eignet. Denn es erlaubt in besonders vorteilhafter Art und Weise, alle in einem Automobil oder in einer Industriesteuerung anfallenden Informationsflüsse in einem einzigen Netzwerk zu integrieren, d.h. in einem einzigen Netzwerk sowohl isochrone Dienste als auch asynchrone Dienste abzuwickeln. Die Integration sowohl isochroner als auch asynchroner Dienste in einem einzigen Datenrahmen erlaubt einem modularen und leicht erweiterbaren Aufbau, welcher insbesondere bei Automobilen von besonderem Vorteil ist: Die Ankoppelung von Sonderausrüstungen des Automobils an den bereits serienmäßig vorhandenen Bus ist leicht möglich, so daß es in besonders vorteilhafter Art und Weise eine kostengünstige Implementation eines lokalen Operationsnetzwerks in ein Automobilkonzept erlaubt.

## Patentansprüche

1. Rahmenstrukturiertes Bussystem, bei dem eine Vielzahl von Busstationen auf einen Datenbus zugreifen, und bei dem von einer der Busstationen eine Folge von Datenrahmen (1) konstanter Bit-Länge erzeugt wird, **dadurch gekennzeichnet,** daß jeder Datenrahmen (1) konstanter Länge ein isochrones Rahmenmodul (CFM) und ein asynchrones Rahmenmodul (PFM) enthält, und daß die Aufteilung eines jeden einzelnen Datenrahmens (1) des rahmenstrukturierten Bussystems in das asynchrone und das isochrone Rahmenmodul (CFM,PFM) dynamisch variierbar ist.

2. Rahmenstrukturiertes Bussystem nach Anspruch 1, dadurch gekennzeichnet, daß die Aufteilung eines Datenrahmens (1) in das isochrone und das asynchrone Rahmenmodul (CFM,PFM) durch ein Teilungsmodul (DOM) erfolgt.

3. Rahmenstrukturiertes Bussystem nach Anspruch 2, dadurch gekennzeichnet, daß das Teilungsmodul (DOM) zwischen dem isochronen und dem asynchronen Rahmenmodul (CFM,PFM) angeordnet ist.

4. Rahmenstrukturiertes Bussystem nach Anspruch 2, dadurch gekennzeichnet, daß das Teilungsmodul (DOM) am Beginn eines Datenrahmens (1) angeordnet ist und als Zeiger fungierend Angaben über die Aufteilung des Datenrahmens (1) in das isochrone (CFM) und das asynchrone Rahmenmodul (PFM) enthält.

5. Rahmenstrukturiertes Bussystem nach einem der Ansprüche 2 bis 4, dadurch gekennzeichnet, daß das Teilungsmodul (DOM) durch eine definierte Bitfolge repräsentiert wird, welche in den zu übertragenden Daten nicht vorkommt, oder daß das Teilungsmodul (DOM) über eine Codeverletzung eines geeigneten Leitungscodes realisiert wird.

6. Rahmenstrukturiertes Bussystem nach einem der Ansprüche 1 bis 5, dadurch gekennzeichnet, daß der Datenrahmen (1) ein Startmodul (SOF) und ein Endmodul (EOF) enthält.

7. Rahmenstrukturiertes Bussystem nach einem der Ansprüche 1 bis 5, dadurch gekennzeichnet, daß der Datenrahmen (1) ein Endmodul (EOF) enthält, das das Ende eines Datenrahmens (1) und den Beginn des darauffolgenden Datenrahmens anzeigt.

8. Rahmenstrukturiertes Bussystem nach Anspruch 6 oder 7, dadurch gekennzeichnet, daß das Startmodul (SOF) und das Endmodul (EOF) durch eine definierte Bitfolge repräsentiert werden, oder daß das Startmodul (SOF) und das Endmodul (EOF) über Codeverletzungen eines geeigneten Leitungscodes realisiert werden.

9. Rahmenstrukturiertes Bussystem nach Anspruch 1, dadurch gekennzeichnet, daß die Länge in Bits des isochronen Moduls (CFM) ein ganzzahliges Vielfaches eines Basiskanals (K1-KAS) beträgt,der minimal 1 Bit lang ist.

10. Rahmenstrukturiertes Bussystem nach Anspruch 9, dadurch gekennzeichnet, daß mehrere Basiskanäle (K1-KAS) verkettet mindestens einer Busstation zugeordnet werden.

11. Rahmenstrukturiertes Bussystem nach Anspruch 1, dadurch gekennzeichnet, daß das asynchrone Rahmenmodul (PFM) mehrere Submodule (S1-S3) aufweist, die jeweils einer bestimmten Busstation des rahmenstrukturierten Bussystems zugeordnet sind.

12. Rahmenstrukturiertes Bussystem nach Anspruch 11, dadurch gekennzeichnet, daß die Submodule (S1-S3) des asynchronen Rahmenmoduls (PFM) durch einen Zeitschlitz (GP) getrennt sind, in dem keine Daten übertragen werden.

13. Rahmenstrukturiertes Bussystem nach Anspruch 11, dadurch gekennzeichnet, daß jedes Submodul (S1-S3) ein Start-Flag (SOM), ein Botschaftsmodul (M), eine Botschaftskennung oder ein Token-Flag (TF) und ein End-Flag (EOM) enthält.

14. Rahmenstrukturiertes Bussystem nach Anspruch 3, dadurch gekennzeichnet, daß das Botschaftsmodul (M) ein Botschaftslänge-Flag (ML), ein Botschaftstyp-Flag (MT), ein eigentliches Botschaftsmodul (D) und ein Prüffeld (EC) enthält.

15. Rahmenstrukturiertes Bussystem nach einem der Ansprüche 1 bis 14, gekennzeichnet durch seine Verwendung in einem lokalen Operationsnetzwerk.

16. Rahmenstrukturiertes Bussystem nach einem der Ansprüche 1 bis 15, gekennzeichnet durch seine Verwendung im automotiven Bereich oder für Industriesteuerungen.
